# EUROPÄISCHE PATENTSCHRIFT

(11) **EP 0 968 321 B1**
(45) Veröffentlichungstag und Bekanntmachung des Hinweises auf die Patenterteilung: **01.08.2001**
(21) Anmeldenummer: 98914818.4
(22) Anmeldetag: 21.02.1998
(51) Int. Cl.: C23C 30/00

(54) **SCHNEIDEINSATZ ZUM ZERSPANEN**
CUTTING INSERT FOR MACHINING
PLAQUETTE DE COUPE POUR USINAGE

(30) Priorität: 05.03.1997 DE 19708880
(43) Veröffentlichungstag der Anmeldung: 05.01.2000
(73) Patentinhaber: Widia GmbH, 45145 Essen (DE)
(72) Erfinder: KÖNIG, Udo, D-45149 Essen (DE)
(74) Vertreter: Vomberg, Friedhelm, Dipl.-Phys.
(86) Internationale Anmeldenummer: DE9800553
(87) Internationale Veröffentlichungsnummer: WO9839499

(56) Entgegenhaltungen:
- EP-A- 0 534 905
- EP-A- 0 695 884
- US-A- 4 415 419
- US-A- 5 482 637

## Beschreibung

Nach dem Stand der Technik ist es bekannt, daß die Verschleißcharakteristiken von Schneideinsätzen, die beispielsweise aus einem Hartmetall, einem Cermet, einer Keramik oder Stahl bestehen können, durch eine Beschichtung verbessert werden können. Insbesondere bei Hartmetall-Schneideinsätzen zum Drehen, Fräsen, Bohren, Gewindeschneiden sowie bei Reibahlen sind Beschichtungen aus Carbiden, Nitriden, Carbonitriden, Oxicarbonitriden, Oxiden und/oder Boriden mindestens eines der Elemente der IVa- bis VIa-Gruppe des Periodensystemes, aber auch keramische Beschichtungen, bekannt. Als Beispiele sei nur auf TiC, TiN und/oder Al₂O₃ verwiesen. Die Dicke solcher Schichten beträgt regelmäßig 5 bis 15 *µ*m. Unbeschichtete wie beschichtete Schneideinsätze werden häufig während des Zerspanens mittels flüssigen Kühlschmierstoffen gekühlt, um die bei der Spanbildung entstehende Wärme zu reduzieren oder abzuführen. Die Verwendung von flüssigen Kühlschmierstoffen kann jedoch einem wirkungsvollen Korrosionsschutz entgegenwirken, sofern nicht gewährleistet ist, daß die in dem Kühlschmierstoff enthaltenen Verbindungen keine Reaktionen mit der Werkstückoberfläche eingehen. Darüber hinaus sind flüssige Kühlschmierstoffe zum Teil gesundheitsgefährdend und müssen aufwendig entsorgt werden.

Es sind daher bereits Vorschläge gemacht worden, auf flüssige Kühlschmierstoffe zu verzichten und statt dessen die Voraussetzung bei Werkzeugen zu schaffen, trocken arbeiten zu können. Beispielsweise wird in der US-A-4 619 866 ein Verfahren zur Herstellung eines Substratkörpers aus einem Hartmetall oder einer Keramik mit einer Al₂O₃-Beschichtung beschrieben, bei dem der Substratkörper einer Gasphase mit einem oder mehreren Metallhalogeniden bei 700°C bei 1200°C in einem CVD-Verfahren ausgesetzt wird. Zur Erhöhung des Schichtwachstums der Al₂O₃-Schicht wird der Gasphase in einer Menge von 0,03 bis 1 Vol.-% ein Stoff zugegeben, der aus der Gruppe Schwefel, Selen, Tellur, Phosphor, Arsen, Antimon, Wismut oder Mischungen hieraus ausgewählt wird. Beispielhaft wird die Zugabe von H₂S angegeben, die sowohl zu einer Erhöhung der Abscheidegeschwindigkeit als auch zur Abscheidung von α- und κ-Aluminiumoxid führen soll. Verfahrenstechnisch ist die Verwendung von H₂S sowohl wegen der extremen unangenehmen Geruchsbelästigung als auch der sich ergebenden, die Anlage kontaminierenden H₂S-Spaltprodukte nachteilig.

Entsprechendes gilt auch für das in der EP 0 523 021 A1 beschriebene Verfahren, bei dem ein Substratkörper mit mindestens einem Carbid, Nitrid, Carbonitrid oder Oxicarbonitrid der Elemente der IVa- bis VIa-Gruppe des Periodensystemes beschichtet werden soll, wozu im Reaktionsgas u.a. 0,4 % H₂S zugegeben werden soll.

Zur Erzeugung einer rißfreien Oberflächenbeschichtung wird weiterhin in der EP 0 659 903 A1 vorgeschlagen, der Gasatmosphäre, die CO₂, CO und AlCl₃ neben Wasserstoff enthält, SF₆ in einer Menge von 0,2 % neben 4 % HCl, Rest jeweils Wasserstoff, beizugeben.

Die EP 0 534 905 B1 beschreibt ein Verfahren zur Herstellung eines Zerspanungswerkzeuges, das mit mindestens einer Verbindung beschichtet wird, die aus mindestens einem Element der Gruppe O, S, Se, Te einerseits und aus mindestens einem Element der Gruppe V, Nb, Ta, Cr, Mo und W andererseits besteht. Insbesondere wird Molybdändisulfid als verschleißmindernde Schmierstoffschicht empfohlen. Der Nachteil einer reinen Molybdändisulfid-Schicht liegt darin, daß aufgrund der geringen Härte die Schicht schnell abgetragen wird.

Aus der DD 202 898 ist z.B. eine Folge von einer Hartstoffschicht aus TiC und einer weichen MoS₂-Schicht bekannt, mit der man den Vorteil der erhöhten Härte des TiC mit einer Verbesserung des Gleitverhaltens der Außenlage verknüpfen wollte.

Ähnliche Überlegungen sind für aus Edelstählen hergestellte Gleitlager angestellt worden. Nach der DE 24 15 255 A1 sollen zur Erhöhung der Haftung auf den Lagerflächen zunächst eine gesputterte MoS₂ oder WS₂ bestehende Grundierschicht mit einer Dicke von 1 bis 2 *µ*m und anschließend eine weitere Schicht polierend aufgetragen werden, die entweder aus MoS₂, WS₂ oder aus einem Kunststoff, wie Polytetrafluorethylen besteht. Einer der Nachteile solcher Schichten besteht darin, daß diese eine aufwendige PVD-Technologie erfordern.

Es ist Aufgabe der vorliegenden Erfindung, einen Schneideinsatz und ein Verfahren zu seiner Herstellung mit der Zielsetzung anzugeben, daß dieser Schneideinsatz trocken, d.h. ohne Verwendung von Kühlschmierstoffen, verwendet werden kann, seine Herstellung geringstmögliche Aufwendungen erfordert und eine hohe Standzeit erreicht wird.

Diese Aufgabe wird durch den Schneideinsatz nach Anspruch 1 gelöst, der erfindungsgemäß eine einzige oder eine äußere Schicht aus einem Kunststoff mit darin dispergierten Festschmierstoffteilchen, vorzugsweise Sulfiden oder Seleniden des Molybdäns, Wolframs und/oder Titans enthält. Der Vorteil dieses Schneideinsatzes liegt darin, daß eine solche Schicht nicht aufgedampft werden muß, sondern durch Streichen, Lackieren, Spritzen oder ähnliches aufgetragen werden kann. Zwar wird der Träger entsprechend seiner Verschleißanfälligkeit relativ rasch durch den ablaufenden Span abgetragen, jedoch können vom Rand der Kontaktzonen ständig neue Festschmierstoffteilchen reibungsvermindernd in den Prozeß eingreifen.

Vorzugsweise Ausführungen des Schneideinsatzes sind in den Unteransprüchen beschrieben.

Anders als bei Hartstoffschichten oder mehrlagigen Hartstoffbeschichtungen, die bei größer werdender Dicke zum Abplatzen neigen, ist die Dicke der mit Festschmierstoffteilchen dotierten einzigen und äußeren Schicht nicht kritisch. Im Gegenteil, die Schicht sollte durchaus dicker als Hartstoffschichten sein, um einen genügenden Vorrat an Festschmierstoffteilchen anbieten zu können. Die Schichtdicken können somit zwischen 5 µm und 500 µm liegen, bewährt haben sich Schichtdicken zwischen 50 µm bis 150 *µ*m.

Der Kunststoff, in dem Festschmierstoffteilchen gebunden sind, ist vorzugsweise ein duroplastischer oder thermoplastischer Polymerstoff, kann beispielsweise Polytetrafluorethylen (PTFE) sein, das selbst als weich, biegsam und zäh sowie abriebfest bekannt ist.

Der Volumenanteil der Festschmierstoffteilchen in der Schicht wird entsprechend den Zerspanungsbedingungen wählbar sein und beträgt zwischen 10 % bis 80 %. Unterhalb von 10 % sind die Schmierstoffeigenschaften zu schwach, oberhalb von 80 % wird die einzige oder äußere Schicht zu weich. Die Korngrößen der Festschmierstoffteilchen liegen vorzugsweise zwischen 0,1 µm und 20 µm.

Der Kunststoff kann auch ein Lack sein, der den Vorteil hat, spritz- oder streichfähig zu sein. Beispielsweise kommen Duroplaste auf der Basis von Epoxid-, Polyester-, Polyurethan- und Acrylatharzen infrage. Weitere vorzugsweise verwendbare Kunststoffe sind Alkydharzlack, Polyesterlack, Zellulosenitratlack (Nitrolack), ein Lack aus einer Vinylpolymerisation oder ein Phenolharzlack.

Nach einer Weiterentwicklung der Erfindung bietet es sich an, in der einzigen oder äußeren Schicht Farbpigmente einzulagern, die eine Kennzeichnung von Schneideinsätzen, beispielsweise nach Einsatzgebieten, Schmiermitteldotierung etc. liefern.

Der Kunststoff kann neben dem Festschmierstoff, "insbesondere Molybdändisulfid-Teilchen, noch weitere, auch nicht organische Füllstoffe aufweisen.

Vorzugsweise wird der Kunststoff mit den darin dispergierten Festschmierstoffteilchen durch Pinselauftrag, Sprühen oder Tauchen in einem Bad oder in einem Nebel aufgebracht.

Ein Ausführungsbeispiel der Erfindung - auch im Vergleich zum Stand der Technik - wird im folgenden beschrieben.

Für die Vergleichstest sind einheitlich Schneidwerkzeuge der Wendeschneidplattenbezeichnung CNMG 120412 verwendet worden. Der Werkstoff bestand in einer Legierung der Sorte X5CrNi18 9. Eine erste Reihe von Wendeschneidplatten besaß eine aus aufeinanderfolgenden Lagen bestehende, insgesamt 12 *µ*m dicke Beschichtung aus TiN, TiCN und TiN, die mittels CVD aufgetragen worden war. Ein Teil dieser Platten wurde in einem Ultraschallbad gereinigt und in ein Bad getaucht, das aus einer zähflüssigen Masse aus einem farblosen Nitro-Kombinationslack mit feinteiligem Molybdändisulfidpulver bestand. Nach dem Tauchgang wurden die Wendeschneidplatten abgetropft und in einem Ofen bei 120°C getrocknet. Nach der Trocknung wiesen die Platten einen ca. 120 *µ*m dicken, schwarzgrauen Überzug auf, der aus mit Molybdändisulfid beladenem Lack bestand. Dieser Lack erwies sich als abriebfest.

Die Vergleichszerspanungsversuche wurden an einer Welle aus dem zähen, hochlegierten Stahl X5CrNi18 9 (rostfreier Stahl) durchgeführt. Bekanntlich ist die thermische Belastung des Schneideinsatzes bei diesem Werkstoff besonders hoch. Es wurden folgende Schnittparameter eingestellt:

| | |
|---|---|
| Schnittgeschwindigkeit | 140 m/min |
| Schnittiefe | 2,5 mm |
| Vorschub | 0,25 mm/Umdrehung |
| Zerspanung ohne Kühlschmiermittel | |

Der Schnittvorgang wurde bereits nach kurzen Intervallen von 10 und 30 Sekunden unterbrochen, wonach die Schneiden unter einem Mikroskop betrachtet worden sind. An der Schneidplatte ohne den MoS₂-dotierten Lack konnte kein meßbarer Verschleiß festgestellt werden. Bei der Wendeschneidplatte mit dem MoS₂-Überzug hatte der Zerspanungskontakt (ablaufende Span) die Schneidecke bis zur Hartstoffbeschichtung freigelegt und den MoS₂-Lack in Richtung Spanablauf beiseite geschoben, jedoch war auch an der obersten TiN-Schicht kein Verschleiß erkennbar. Der Drehversuch wurde nun fortgesetzt und die Schneiden jeweils nach größeren Zeitabständen untersucht, um die Verschleißmarkenbreiten VB der Haupt- und Nebenschneiden mit dem Meßmikroskop festzustellen.
Die folgende Tabelle zeigt den fortschreitenden Verschleiß der Hauptschneide VB und den maximal feststellbaren Verschleiß VBₘₐₓ

| Wendeschneidplatte | | | | |
|---|---|---|---|---|
| | mit MoS₂-Lack | | ohne MoS₂-Lack | |
| Schnittzeit tc | VB mm | VBₘₐₓ mm | VB mm | VBₘₐₓ mm |
| 10 S | - | - | - | - |
| 30 s | - | - | - | - |
| 2 min | 0,04 | 0,09 | 0,05 | 0,08 |
| 4 min | 0,06 | 0,12 | 0,05 | 0,12 |
| 16 min | 0,07 | 0,16 | 0,23 | 0,97 *) |
| 32 min | 0,10 | 0,24 | | |

| | | | | |
|---|---|---|---|---|
| *) Hauptschneide ausgebrochen | | | | |

Wie aus der Tabelle ersichtlich, sind die Schneideinsätze mit dem zusätzlichen Überzug aus einem mit MoS₂-dotierten Lack verschleißresistenter: Die Standzeiten konnten mehr als verdoppelt werden. Eine Erklärung für die erhebliche Standzeitverbesserung dürfte darin liegen, daß die Schicht aus MoS₂-Lack zwar rasch aus der Kontaktzone des Spanes getrieben wird, daß jedoch vom Rand der Kontaktzone ständig neue MoS₂-Partikel reibungsvermindert in den Prozeß eingreifen.

In einem weiteren Versuch wurden mit Schneideinsätzen ohne den erfindungsgemäßen Überzug, jedoch bei Anwendung von flüssigem Kühlschmierstoff Schneidversuche am gleichen Objekt durchgeführt. Die erreichten Schnittzeiten lagen zwischen 20 und 24 Minuten. Dies zeigt, daß die mit Trockenschmierstoff dotierte Kunststofflage hinsichtlich der Standzeit selbst dann überlegen ist, wenn konventionell (naß) Kühlschmierstoff verwendet wird. Als Kunststoff, der die Funktion eines Trägers für die Festschmierstoffteilchen hat, kommen unterschiedliche lufthärtende Lackstoffe, Zweikomponentenlacke und Duroplaste wie Epoxidharze infrage. Thermoplaste kommen grundsätzlich ebenfalls infrage, allerdings müssen bei der Beschichtung höhere Temperaturen aufgewendet werden.

Die farbliche Kennzeichnung der Lacke ermöglicht gewünschte Unterscheidungskennzeichen.

Das Aufbringen des MoS₂-haltigen Überzuges kann neben dem Tauchverfahren auch durch Aufpinseln, Aufrollen mit einer schwammigen Walze, Aufsprühen (unter Anwendung von Gasdruck) oder mittels anderer Farbauftragsverfahren vorgenommen werden, z.B. in einem Farbnebel unter Anwendung elektrostatischer Effekte. Neben Molybdändisulfid sind als Festschmierstoffe insbesondere Molybdändiselenid sowie Sulfide und Selenide des Wolframs und Titans geeignet. Die bevorzugte Schichtdicke des dotierten Kunststoffes liegt zwischen 50 *µ*m und 150 *µ*m.

## Patentansprüche

1. Schneideinsatz zum Zerspanen, gekennzeichnet durch eine einzige oder eine äußere Schicht aus einem Kunststoff mit darin dispergierten Festschmierstoffteilchen, vorzugsweise Sulfiden und/oder Seleniden des Molybdän, Wolfram und/oder Titan.

2. schneideinsatz nach Anspruch 1, dadurch gekennzeichnet, daß die einzige oder äußere Schicht eine Dicke zwischen 5 *µ*m und 500 *µ*m besitzt, vorzugsweise zwischen 50 *µ*m und 150 *µ*m.

3. Schneideinsatz nach Anspruch 1 oder 2, dadurch gekennzeichnet, daß der Kunststoff ein duroplastischer oder thermoplastischer Polymerstoff ist.

4. Schneideinsatz nach einem der Ansprüche 1 bis 3, dadurch gekennzeichnet, daß der Volumenanteil der Festschmierstoff-Teilchen in der Schicht 10 bis 80 % beträgt und die Korngrößen der Festschmierstoffteilchen zwischen 0,1 *µ*m und 20 *µ*m liegen.

5. Schneideinsatz nach einem der Ansprüche 1 bis 5, dadurch gekennzeichnet, daß der Kunststoff ein Lack, vorzugsweise Pulverlack, wie Duroplast auf der Basis Epoxid-, Polyester-, Polyurethan- und Acrylatharz ist.

6. Schneideinsatz nach Anspruch 5, dadurch gekennzeichnet, daß der Lack ein Alkydharzlack, Polyesterlack, Zellulosenitratlack (Nitrolack), ein Lack aus einer Vinylpolymerisation oder ein Phenolharzlack ist.

7. Schneideinsatz nach einem der Ansprüche 1 bis 6, dadurch gekennzeichnet, daß in die Kunststoffschicht Farbpigmente eingelagert sind.

8. Verfahren zur Herstellung eines Schneideinsatzes nach einem der Ansprüche 1 bis 7, dadurch gekennzeichnet, daß der beschichtete oder unbeschichtete Grundkörper mit einem mit Festschmierstoffteilchen dotierten Kunststoff überzogen wird, vorzugsweise durch eine Tauchbadbehandlung, ein Aufsprühen, Aufpinseln oder Durchlaufen eines Farbnebels und eines elektrostatischen Auftragens der im Lack dispergierten Festschmierstoffteilchen.

## Claims

1. Cutting insert for machining characterized by a single or an outermost layer of synthetic resin having solid lubricant particles dispersed therein, preferably sulfides and/or selenides of molybdenum, tungsten and/or titanium.

2. Cutting insert according to claim 1, characterized in that the single or outermost layer has a thickness between 5 *µ*m and 500 *µ*m, preferably between 50 *µ*m and 150 *µ*m.

3. Cutting insert according to claim 1 or 2, characterized in that the synthetic resin is a thermoplastic or thermosetting polymeric material.

4. Cutting insert according to one of claims 1 to 3,
characterized in that the volume proportion of the solid lubricant particle in the layer amounts to 10 to 80 % and the particle size of the solid lubricant particles is between 0,1 *µ*m and 20 *µ*m.

5. Cutting insert according to one of claims 1 to 4,
characterized in that the synthetic resin is a lacquer, preferably a powder lacquer as a thermoset on the basis of an epoxy resin, polyester resin, a polyurethane resin or an acrylate resin.

6. Cutting insert according to claim 5, characterized in that the lacquer is an alkyd resin lacquer, a polyester lacquer, a cellulose nitrate lacquer, (nitrolacquer), a vinyl polymerization lacquer or a phenol resin lacquer.

7. Cutting insert according to one of claims 1 to 6,
characterized in that coloring pigments are incorporated in that synthetic resin layer.

8. Cutting insert according to one of claims 1 to 7,
characterized in that the coated or uncoated base body is coated with a solid lubricant particle doped synthetic resin, preferably by an immersion bath treatment, a spraying on of the lacquer, a brushing on of the lacquer or by passing the cutting insert through a painting aerosol for an electrostatic application of the solid lubricant dispersed in the lacquer.

## Revendications

1. Insert de coupe pour l'usinage à enlèvement de copeaux, caractérisé par une seule couche ou une couche extérieure en une matière synthétique avec des particules de lubrifiant solide dispersées là-dedans, de préférence des sulfures et/ou séléniures du molybdène, du tungstène et/ou du titane.

2. Insert de coupe selon la revendication 1, caractérisé par le fait que la couche unique ou extérieure présente une épaisseur comprise entre 5 µm et 500 µm, de préférence entre 50 µm et 150 µm.

3. Insert de coupe selon la revendication 1 ou 2, caractérisé par le fait que la matière synthétique est une matière polymère thermodurcissable ou thermoplastique.

4. Insert de coupe selon l'une des revendications 1 à 3, caractérisé par le fait que la part de volume des particules de lubrifiant solide dans la couche est comprise entre 10 et 80 % et que les grosseurs de grain des particules de lubrifiant solide sont comprises entre 0,1 µm et 20 µm.

5. Insert de coupe selon l'une des revendications 1 à 4, caractérisé par le fait que la matière synthétique est une laque, de préférence une laque en poudre comme une résine thermodurcissable à base de résine époxyde, de résine polyester, de résine de polyuréthane et de résine d'acrylate.

6. Insert de coupe selon la revendication 5, caractérisé par le fait que la laque est un vernis à base de résines alkydes, une laque polyester, une laque de nitrate de cellulose (laque cellulosique), une laque formée par une polymérisation de vinyle ou une laque de résine phénolique.

7. Insert de coupe selon l'une des revendications 1 à 6, caractérisé par le fait que des pigments colorants sont incorporés dans ladite couche en matière synthétique.

8. Procédé de fabrication d'un insert de coupe selon l'une des revendications 1 à 7, caractérisé par le fait que le corps de base revêtu ou non revêtu est revêtu d'une matière synthétique dopée de particules de lubrifiant solide, de préférence par un traitement par immersion, par une application par projection, par une application à la brosse ou en passant par un brouillard de peinture ou par une application électrostatique des particules de lubrifiant solide dispersées dans la laque.
